# FASCICULE DE BREVET EUROPEEN

(11) **EP 4 082 718 B1**
(45) Date de publication et mention de la délivrance du brevet: **19.02.2025**
(21) Numéro de dépôt: 21170438.2
(22) Date de dépôt: 26.04.2021
(51) Int. Cl.: B23Q 3/06, G04B 29/02, G04D 1/00, G04D 3/00

(54) **POSAGE D'HORLOGERIE**
AUFNAHMEVORRICHTUNG FÜR UHR
TIMEPIECE HOLDER

(43) Date de publication de la demande: 02.11.2022
(73) Titulaire: ETA SA Manufacture Horlogère Suisse, 2540 Grenchen (CH)
(72) Inventeur: PHAM, Patric, 3427 Utzenstorf (CH); RÖTHLISBERGER, Joël, 2540 Grenchen (CH)
(74) Mandataire: ICB SA

(56) Documents cités:
- US-B2- 10 953 504
- US-B2- 7 163 364

## Description

### Domaine technique de l'invention

L'invention concerne un posage pour le maintien en position d'usinage et/ou d'assemblage d'un composant sensiblement plat d'épaisseur inférieure ou égale à une épaisseur maximale prédéterminée et s'étendant de part et d'autre d'un plan médian.

L'invention concerne encore un moyen de production comportant un dispositif d'usinage et/ou d'assemblage porteur d'un tel posage
L'invention concerne le domaine des outillages de fabrication pour la micromécanique, en particulier pour l'horlogerie.

### Arrière-plan technologique

Dans l'état de l'art, en ce qui concerne la production d'ébauches horlogères, le référencement du composant à usiner est garanti par des goupilles (côté posage) qui vont se loger dans des trous (côté pièce). Cela nécessite, lors du chargement et déchargement des pièces, un mouvement d'insertion vertical, dans l'axe des goupilles. Le composant est maintenu selon des appuis ponctuels par des presse-flans assez volumineux, qui sont des brides mobiles venant en appui local sur certaines surfaces du composant, et susceptibles d'induire des déformations de celui-ci en cas d'effort d'appui excessif.

Afin de permettre cette insertion verticale, les presse-flans doivent se dégager. Cela est souvent atteint à travers une rotation de 90° de chacun des presse-flans, montés rotatifs. Cette rotation est générée à travers une came couplée au mouvement vertical des presse-flans. Ainsi le mouvement vertical des presse-flans est de relativement grande amplitude, car il combine deux mouvements distincts : une partie de mouvement vertical de serrage, et une partie de mouvement combiné vertical rotatif pour faire pivoter les presse-flans.

Cette grande course rend impossible l'emploi de la technologie d'articulations flexibles, en raison des courses limitées dans ce genre de technologie. Ces posages de l'état de l'art ne peuvent donc pas être monobloc, ils sont souvent composés de beaucoup de pièces qui coulissent les unes dans les autres, leur donnant un certain jeu de fonctionnement et ainsi forcément une rigidité et précision réduite. Les grandes courses, le grand nombre de pièces et les opérations nécessaires à l'assemblage du tout rendent ces posages relativement encombrants, complexes, lourds et coûteux. La constitution de panoplies de plusieurs posages sur une même palette ou un même support est, de ce fait, entravée par les mêmes considérations.

Cela se traduit aussi dans des accès très limités pour l'usinage, souvent uniquement une seule face est accessible, et encore de façon restreinte. Il est alors nécessaire de procéder, pour un usinage recto-verso, à un démontage du composant, un retournement, et une nouvelle opération de positionnement et de blocage préalable à l'usinage de l'autre face. Le document US 7 163 364 B2 montre un posage dont les mâchoires ne sont pas disposées de part et d'autre du plan de référence, et ne comportant pas d'articulations flexibles.

### Résumé de l'invention

L'invention se propose de développer un posage pour améliorer la précision d'usinage des composants, à travers un processus plus simple, en une seule étape.

Les posages de l'art antérieur sont souvent encombrants, lourds, complexes et chers.

L'invention met encore en oeuvre un posage monobloc, ce qui permet d'améliorer la performance du posage (rigidité, précision), de réduire la complexité et le poids, le rendant plus apte à remplir les conditions pour de l'usinage à très haute vitesse (UGV) et/ou pour la miniaturisation dans la tendance des micromachines / « microfactories ».

A cet effet, l'invention concerne un posage pour le maintien en position d'usinage et/ou d'assemblage d'un composant sensiblement plat d'épaisseur inférieure ou égale à une épaisseur maximale prédéterminée et s'étendant de part et d'autre d'un plan médian, selon la revendication 1.

L'invention concerne encore un moyen de production comportant un dispositif d'usinage et/ou d'assemblage porteur d'un tel posage et d'un tel entraîneur pour commander un mouvement du posage entre ses positions d'ouverture et de fermeture, selon la revendication 17.

### Brève description des figures

Les buts, avantages et caractéristiques de l'invention apparaîtront mieux dans la description détaillée qui va suivre, en référence aux dessins annexés, où :
- la figure 1 représente, de façon schématisée et en vue en plan, le centrage usuel d'un flan par goupilles, en micromécanique, ce flan étant maintenu frontalement par des brides appelées presse-flans, non représentées ici, et qui empiètent fortement sur le domaine d'usinage ;
- la figure 2 représente, de façon similaire à la figure 1, le mode de positionnement propre à la mise en oeuvre de l'invention, avec un appui radial du flan sur des butées situées hors du domaine d'usinage ; quelques usinages frontaux et radiaux à effectuer sont représentés sur ce flan ;

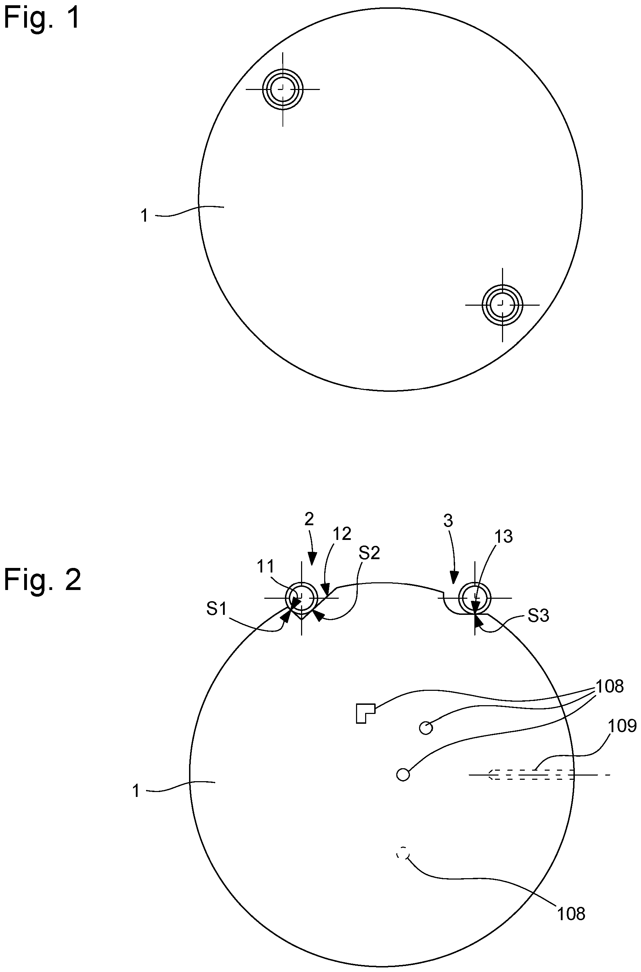

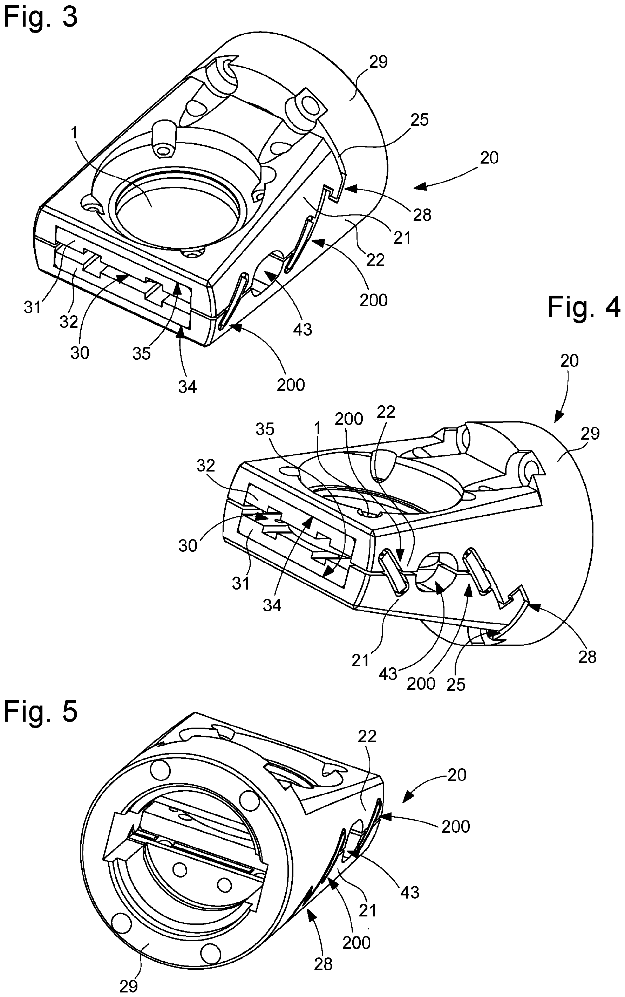

- la figure 3 représente, de façon schématisée et en perspective, un posage selon l'invention, comportant deux mâchoires dont l'une est destinée à être fixée sur une machine, et dont l'autre est mobile par rapport à la première ; une fente d'introduction entre ces mâchoires permet l'introduction d'un flan jusqu'aux butées illustrées en figure 2, non visibles ici ; on voit sur les côtés du posage des articulations flexibles à lames élastiques, constituant un système de table parallèle entre les deux mâchoires, et dont le faible encombrement permet de ménager de larges dégagements pour l'usinage: dans l'exemple illustré dessus et dessous, et sur les côtés ;
- la figure 4 représente, de façon similaire à la figure 3 et sous un autre angle, le même posage ;
- la figure 5 représente, de façon similaire à la figure 3 et sous un autre angle encore, le même posage, du côté de la semelle de fixation que comporte une des mâchoires ;
- la figure 6 représente, de façon schématisée et en coupe, le posage des figures 3 à 5, dans une variante qui comporte des inserts de maintien entre les mâchoires et le flan ; la mâchoire fixée à la machine est en partie inférieure, la mâchoire supérieure est mobile parallèlement à la précédente ; des rainures comportant des surfaces de butée assurent une limitation de course ;
- la figure 7 représente, de façon schématisée et en vue de dessus, du côté de la mâchoire supérieure, le posage des figures 3 à 6 ;
- la figure 8 représente, de façon schématisée et en vue de côté, le posage des figures 3 à 7 ; la mâchoire supérieure est en bas de la figure ;
- la figure 9 représente, de façon schématisée et en vue de dessous, du côté de la mâchoire inférieure, le posage des figures 3 à 8 ;
- la figure 10 représente, de façon schématisée et en vue de côté, le posage des figures 3 à 9 ; la mâchoire inférieure est en bas de la figure ;
- la figure 11 représente, de façon schématisée et en coupe, le flan et son encombrement maximal en épaisseur ;
- la figure 12 représente, de façon schématisée, un détail d'une articulation flexible ;
- la figure 13 représente, de façon schématisée, un moyen de production comportant un dispositif d'usinage et/ou d'assemblage porteur d'un tel posage et d'un tel entraîneur pour commander un mouvement du posage entre ses positions d'ouverture et de fermeture ; l'entraîneur est ici porté par l'une des mâchoires ;
- la figure 14 représente, de façon similaire à la figure 13, un tel moyen de production où l'entraîneur est porté par le dispositif d'usinage et/ou d'assemblage.

### Description détaillée de l'invention

L'invention concerne un posage/serrage d'usinage et/ou d'assemblage pour pièces plates/fines (type ébauches horlogères), permettant un accès à toutes les faces d'un tel composant. On adoptera dans la suite de l'exposé uniquement le terme « posage » pour définir le dispositif selon l'invention, étudié pour le maintien d'un composant pendant une opération d'usinage et/ou d'assemblage. Par « usinage » on entend ici, très largement, toute opération effectuée sur un composant, notamment et non limitativement usinage à l'outil coupant, au laser, au jet d'eau, au plasma, ou similaire, ou bien traitement thermique ou de surface, de sérigraphie, de peinture, ou autre ; par « assemblage » on entend de la même façon toute opération de réunion de composants, telle que chassage, bouterollage, brasage, soudage, collage, ou autre.

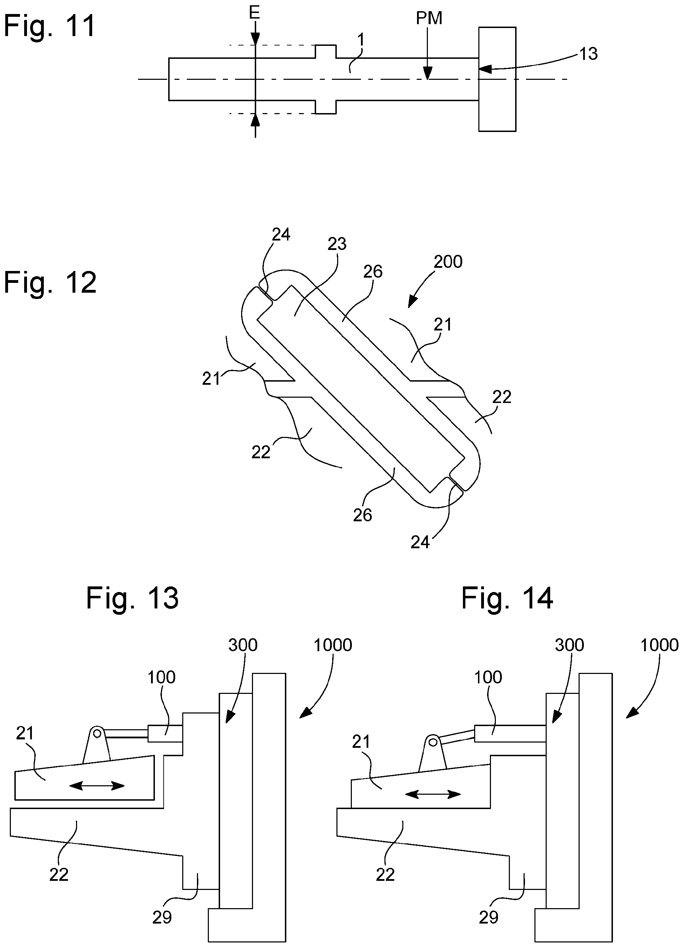

L'invention est conçue principalement pour des composants 1 sensiblement plats (aussi dits méplats), d'épaisseur inférieure ou égale à une épaisseur maximale E prédéterminée et s'étendant de part et d'autre d'un plan médian (PM) ; l'ébauche d'un tel composant 1 n'est pas nécessairement symétrique, et peut comporter des reliefs saillants ou rentrants, tel que visible sur la figure 11, sous réserve de respecter la cote d'épaisseur maximale E, comme une pièce de monnaie à introduire dans un monnayeur.

Plus particulièrement, dans une exécution particulièrement avantageuse, ce posage est monobloc à articulations flexibles.

Les figures 1 et 2 mettent en évidence la différence entre l'art antérieur et l'invention.

La figure 1 schématise l'insertion verticale d'un composant sur deux goupilles, dans l'art antérieur usuel. Il s'agit d'un serrage classique, avec insertion du composant 1 en vertical. Dans ce référencement classique, des goupilles sont insérées verticalement (perpendiculaire au plan de dessin) dans des trous, ou inversement. Afin de permettre l'insertion du composant 1 sur son posage, plusieurs presse-flans (souvent quatre) répartis sur la surface du composant doivent monter et pivoter afin de dégager l'accès pour la mise en place d'un composant 1, puis pour son dégagement en fin d'opération. Cela implique généralement une course de serrage des presse-flans de plusieurs millimètres voire centimètres, car la rotation des presse-flans est réalisée à travers une came qui convertit le mouvement vertical en rotation (typiquement 90°).

La figure 2 illustre le mode d'ablocage proposé lors de la mise en oeuvre de l'invention, avec une insertion du composant 1 à l'horizontal, jusqu'à un appui de butée. Ce type d'insertion nécessite un posage 20 d'un type particulier, objet de l'invention.

Selon l'invention, ce posage 20 comporte des butées 2, 3, qui définissent au moins deux surfaces radiales d'appui de butée S1, S2, S3, comportant des génératrices sensiblement perpendiculaires à un plan de référence PR du posage 20, et qui sont agencées pour coopérer en appui de butée avec des surfaces périphériques d'appui sur chant 11, 12, 13, d'un composant 1.

Bien sûr l'ablocage choisi dépend du type d'ébauche préalable à l'opération, et des usinages périphériques qui peuvent être effectués lors d'une opération de débit, d'étampage, ou encore d'usinage, avant l'opération à effectuer sur le posage 20 : il est bien clair que le nombre, la forme et la position des surfaces de contact dépendent de cette géométrie d'ébauche particulière. Par exemple, le composant 1 peut comporter deux surfaces définissant un vé, venant en coopération avec deux surfaces complémentaires de butées définissant un vé complémentaire. La variante non limitative illustré par la figure 2 concerne un référencement isostatique à trois points de contact, permettant une insertion horizontale dans le plan de la figure : une première butée 2 coopère en appui avec une première entaille du composant 1 qui comporte deux surfaces 11 et 12, sur lesquelles viennent en appui deux surfaces radiales d'appui de butée S1, S2 ; une deuxième butée 3 coopère en appui avec un dégagement du composant 1 qui comporte une surface plane 13, sur laquelle vient en appui une surface radiale d'appui de butée S3. De façon particulière et non limitative, et tel que visible sur la réalisation illustrée, ces entailles radiales peuvent être obtenues soit par étampage soit par usinage préalable du composant 1.

Le posage 20 est agencé de façon à ce que le plan médian PM d'un composant 1 vienne parallèle ou confondu avec le plan de référence PR, dans la position d'usinage et/ou d'assemblage.

Grâce à l'insertion à l'horizontal, la course de serrage, qui est effectuée sur l'épaisseur du composant 1, peut être très faible, de l'ordre de quelques dixièmes de millimètres, et est réalisé avec des articulations flexibles.

Selon l'invention, le posage 20 comporte une chambre 40 qui est bordée, de part et d'autre du plan de référence PR, par des mâchoires 21 et 22, lesquelles comportant des surfaces d'ablocage 310, 320, pour le maintien d'un composant 1. Avantageusement, ces surfaces d'ablocage 310, 320, sont sensiblement annulaires, de façon à bien répartir l'effort de serrage sur le composant 1, et à prévenir toute déformation nuisible.

La chambre 40 est ouverte, sur au moins un côté du plan de référence PR, par au moins un dégagement 41, 42, 43 ; ce dégagement 41 ou 42 ou 43 est apte à autoriser le passage d'un outil ou d'un autre composant ou d'un moyen d'usinage et/ou d'assemblage pour effectuer une opération sur un composant 1. Avantageusement le posage 20 comporte deux dégagements 41 et 42, un de chaque côté, de part et d'autre du plan de référence PR, il est ainsi possible d'effectuer des opérations au recto et au verso d'un même composant 1, par exemple et non limitativement des usinages frontaux 108 tels que visibles sur la figure 2, en un seul serrage, simplement en commandant une rotation du posage 20. La réalisation illustrée sur les figures comporte encore des dégagements latéraux 43, qui présentent l'avantage d'autoriser des usinages sur le chant du composant 1, tel l'usinage 109 de la figure 2, par exemple le logement d'une tige de commande ou d'un poussoir sur une platine de montre.

Le posage 20 comporte un unique orifice d'insertion 30, qui est apte à autoriser l'insertion d'un composant 1 dans la chambre 40 vers les surfaces radiales d'appui de butée S1, S2, S3, du posage 20, dans une sens unique.

Le posage 20 est déformable entre, d'une part une position d'ouverture et d'autre part une position de fermeture. Les figures illustrent une exécution non limitative dans laquelle chacune des mâchoires 21, 22, comporte une surface de référence respectivement 35, 34, parallèle au plan de référence PR du posage 20, et, dans une cinématique préférée, ces deux surfaces de référence 35 et 34 restent parallèles l'une à l'autre pendant les manoeuvres de fermeture et d'ouverture.

Dans la position d'ouverture, l'orifice d'insertion 30 présente une ouverture maximale de largeur égale à l'épaisseur maximale E prédéterminée, dans le sens de l'épaisseur d'un composant 1 de part et d'autre de son plan médian PM. Dans cette position d'ouverture, un composant 1 peut être inséré dans la chambre 40 jusqu'en position d'appui de butée sur les surfaces radiales d'appui de butée S1, S2, S3.

Dans la position de fermeture, le posage 20 est déformé autour d'un composant 1 maintenu en appui sur les surfaces radiales d'appui de butée S1, S2, S3, et serré sur son épaisseur par les mâchoires 21, 22, soumises à un effort de fermeture exercé par des moyens de manoeuvre agencés pour rapprocher les mâchoires 21, 22, l'une de l'autre.

Dans l'exemple avantageux illustré, l'une des mâchoires 21 est mobile par rapport à l'autre mâchoire 22 qui est fixée au moyen de production. Bien sûr, chacune des mâchoires peut aussi être mobile par rapport à une structure fixe, mais cela renchérit le mécanisme et augmente son encombrement.

Avantageusement le mouvement de passage de la position d'ouverture vers la position de fermeture tend à conforter l'appui du composant 1 sur ses appuis de butée.

Dans une variante, au moins l'une des mâchoires 21, 22, comporte des moyens de friction qui sont agencés pour tendre à entraîner un composant 1 en appui de butée sur les surfaces radiales d'appui de butée S1, S2, S3, lors de la manoeuvre de fermeture.

Le posage 20 comporte des moyens permettant d'imprimer une course relative biaise des mâchoires 21 et 22 l'une par rapport à l'autre, tout en maintenant le parallélisme entre les surfaces de référence 35 et 34.

On comprend que la conception du posage 20 autorise la préhension et le serrage de maintien de composants 1 de morphologies différentes, pourvu que leur épaisseur soit inférieure à l'épaisseur maximale E, et que leur maintien par les surfaces d'ablocage 310, 320, reste possible ; à ce propos, les figures illustrent une réalisation particulière dans laquelle les surfaces d'ablocage 310, 320, font partie d'inserts amovibles 31 et 32 qui définissent ensemble l'orifice d'insertion 30. Naturellement le posage 20 peut aussi comporter des surfaces d'ablocage 310, 320 directement au niveau des mâchoires 21, 22. L'utilisation d'inserts amovibles 31, 32, apporte de la polyvalence au posage, permet de prendre en charge différentes dimensions et géométries d'ébauches, et permet aussi une bonne maintenance avec la garantie de surfaces de contact toujours nettes. Toutefois le posage 20 est conçu pour fonctionner aussi sans de tels inserts.

Le posage 20 peut être réalisé de différentes manières, notamment avec une fabrication articulée classique, mais coûteuse.

Dans un esprit d'usinage simultané d'une pluralité de composants, par exemple en panoplie sur une palette, il est avantageux de réduire au maximum le coût de fabrication de tels posages, qui peuvent alors être dédiés à une famille de composants.

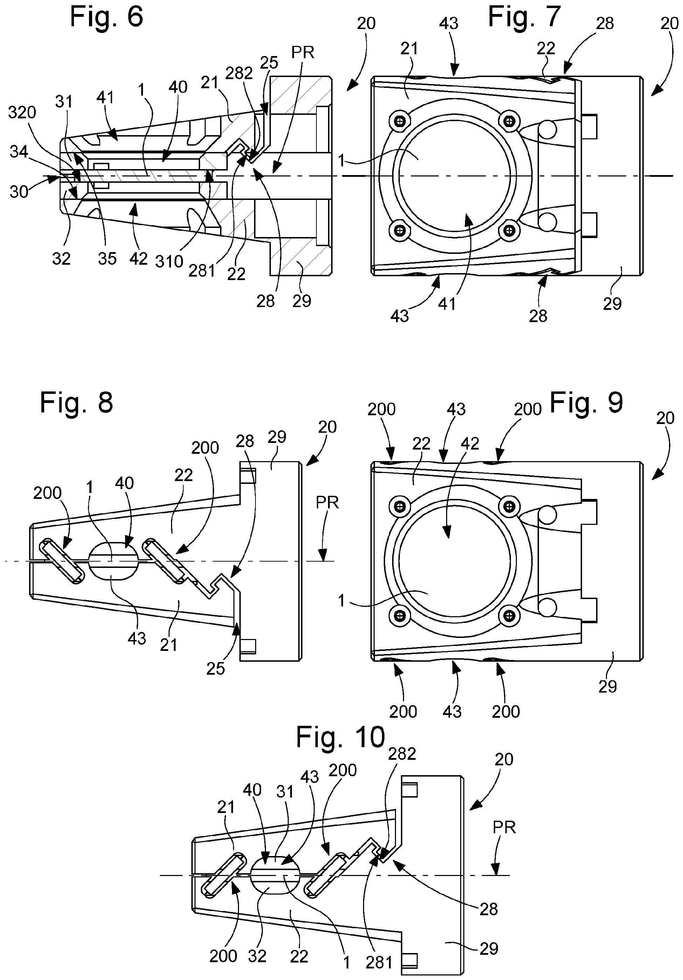

Les figures 3 à 10 illustrent une réalisation avantageuse, non limitative, dans laquelle, à l'exception des inserts amovibles présentés ci-dessus, le posage 20 est monobloc.

La figure 3 illustre un tel posage 20 monobloc, qui peut être fixé directement sur une palette, sur les axes d'une machine-outil, ou similaire.

Plus particulièrement, les moyens de manoeuvre comportent des articulations flexibles 200 ménagées dans le posage 20, et qui sont agencées pour, par déformation élastique, engendrer un mouvement relatif entre les mâchoires 21, 22. Ici la mâchoire supérieure 21 n'est tenue à la mâchoire inférieure 22 que par ses articulations flexibles 200, et une rainure 25 la sépare de la semelle 29 que comporte la mâchoire inférieure 22, et qui sert à la fixation du posage 20 sur la machine.

Plus particulièrement encore, chaque articulation flexible 200 comporte une chambre 26, taillée à la fois dans la mâchoire supérieure 21 et dans la mâchoire inférieure 22, dans laquelle chambre 26 est mobile une masse faisant levier 23, qui est rattachée à chacune des mâchoires 21, 22 par une lame élastique 24 ou par un col, pour former avec les autres articulations flexibles 200 une table parallèle, de façon à contrôler le déplacement relatif parallèle des surfaces de référence 35 et 34.

Ce posage 20 comporte ainsi des articulations flexibles 200, qui sont taillées dans cette pièce. Ces articulations flexibles 200 sont conçues pour, par déformation élastique, engendrer un mouvement relatif entre la partie haute et la partie basse du serrage, qui constituent les mâchoires 21 et 22. Dans cette réalisation particulière, chaque articulation flexible comporte une chambre 26, taillée à la fois dans la mâchoire supérieure 21 et dans la mâchoire inférieure 22, dans laquelle est mobile une masse faisant levier 23, qui est rattachée à chacune des mâchoires 21 et 22 par une lame élastique 24 ; dans une variante non illustrée chaque lame élastique 24 peut être remplacée par un col ; cette conception explique la faible course des mâchoires 21 et 22 l'une par rapport à l'autre, mais en contrepartie elle garantit une répétitivité parfaite de la cinématique, et une bonne tenue dans le temps. Cette configuration est connue sous le nom de « table parallèle », également utilisée dans des oscillateurs de montres mécaniques.

Pour la protection des lames élastiques 24, le posage 20 comporte avantageusement au moins un dispositif limiteur de course 28, représenté par une rainure en forme de S majuscule sur les figures, et dont des surfaces antagonistes 281 et 282 coopèrent en appui de butée en fin de course utile des mâchoires 21 et 22, pour éviter toute déformation dangereuse des articulations flexibles 200, et en particulier des lames élastiques 24, en-dehors de leur domaine de travail normal. Ainsi la boucle de force passe au travers des butées, et non des lames. On comprend que la technologie de tables parallèles à fines lames élastiques, réalisables par un procédé « LIGA » ou similaire assure un mouvement parfaitement parallèle, mais sur une très petite course, ce qui est parfaitement compatible avec la fonction de serrage qu'assure le posage selon l'invention. Les sécurités constituées par le dispositif limiteur de course 28, ainsi que par les faces de la rainure 25 qui constituent une sécurité supplémentaire d'appui de butée de fin de course, sont donc indispensables pour une bonne tenue dans le temps et une répétitivité des performances.

Plus particulièrement, une des mâchoires 21, 22, est une mâchoire supérieure 21 mue par un entraîneur 100 qui est interne au posage 20 ou externe au posage 20, et que comportent les moyens de manoeuvre, et l'autre des mâchoires 21, 22, est une mâchoire inférieure 22 comportant une semelle 29 agencée pour la fixation du posage 20 à un dispositif 300 d'usinage et/ou d'assemblage au sein d'un moyen de production 1000.

Dans une première variante, l'entraîneur 100 est interne au posage 20 et fixé à la semelle 29, tel que visible sur la figure 13.

Dans une deuxième variante, l'entraîneur est externe au posage 20 et fixé à un dispositif d'usinage et/ou d'assemblage sur lequel est fixé le posage 20, tel que visible sur la figure 14.

La mâchoire supérieure 21 peut être actionnée par un entraîneur 100 tel qu'un piston ou similaire.

Dans une variante, chaque levier 23 est oblique mais non perpendiculaire par rapport au plan de référence PR.

Dans autre une variante, chaque levier 23 est oblique mais passe par une position perpendiculaire par rapport au plan de référence PR, dans sa course entre sa position d'ouverture et sa position de fermeture.

L'angle au repos des leviers 23 (non limitativement au nombre de quatre sur les figures) peut être optimisé selon l'application. Plus les leviers 23 sont proches de la verticale (c'est-à-dire de la perpendiculaire au plan de référence PR), plus on obtient un effet d'amplification de la force de serrage. A travers un actionnement horizontal (c'est-à-dire parallèle au plan de référence PR), on obtient une force de serrage verticale et un pincement du composant 1 à usiner entre la mâchoire supérieure 21 et dans la mâchoire inférieure 22 du posage 20.

Avantageusement le posage 20 comporte un ensemble monobloc constitué par les mâchoires 21, 22 et les articulations flexibles 200 qui les relient l'une à l'autre et qui sont agencées pour, par déformation élastique sous l'action d'un entraîneur 100 sur au moins l'une d'elles, engendrer un mouvement relatif de serrage entre les mâchoires 21, 22.

L'invention concerne encore un moyen de production 1000, comportant au moins un dispositif 300 d'usinage et/ou d'assemblage porteur d'au moins un tel posage 20 et d'au moins un tel entraîneur 100, et comportant encore des moyens de commande de chaque entraîneur 100 pour commander un mouvement du posage 20 respectif entre ses positions d'ouverture et de fermeture.

L'invention est décrite ici dans une application en tant qu'actionneur de serrage dans un seul sens. Naturellement elle est aussi utilisable pour constituer un actionneur à double sens. Il convient, alors, de l'équiper d'un limiteur de force et de course dans chaque sens de manoeuvre.

En somme, l'invention permet de disposer d'un posage ultra-compact permettant un accès facilité à toutes les faces du composant 1, et ainsi un usinage complet en un seul serrage. Usiner une pièce en un seul serrage a des répercussions très positives sur la précision du composant 1, car cette disposition ne cumulera pas d'erreurs de repositionnement toujours présentes lors d'un usinage à plusieurs reprises.

Le posage selon l'invention est simple, constitué d'une seule pièce, très précis, sans jeu ni hystérèse, avec un comportement parfaitement linéaire. Ce posage est encore très rigide, car monobloc. Le posage est, encore, léger, ce qui autorise son utilisation pour des applications hautement dynamiques telles que des opérations de tournage ou fraisage UGV ou autre, nécessitant peu d'énergie ou de force pour être déplacé selon les mouvements de la machine d'usinage.

Enfin, le développement de ce posage est avantageusement dimensionné afin d'être intégré dans une machine multibroches.

## Revendications

1. Posage (20) pour le maintien en position d'usinage et/ou d'assemblage d'un composant (1) sensiblement plat d'épaisseur inférieure ou égale à une épaisseur maximale (E) prédéterminée et s'étendant de part et d'autre d'un plan médian (PM), dans lequel ledit posage (20) comporte des butées (2; 3) définissant au moins deux surfaces radiales d'appui de butée (S1; S2; S3) comportant des génératrices sensiblement perpendiculaires à un plan de référence (PR) dudit posage (20), par rapport auquel plan de référence (PR) ledit plan médian (PM) d'un dit composant (1) est parallèle ou confondu dans ladite position d'usinage et/ou d'assemblage, et qui sont agencées pour coopérer en appui de butée avec des surfaces périphériques d'appui sur chant (11; 12; 13) d'un dit composant (1), dans lequel ledit posage (20) comporte une chambre (40) qui est bordée, de part et d'autre dudit plan de référence (PR), par des mâchoires (21; 22) comportant des surfaces d'ablocage (310; 320) pour le maintien d'un dit composant (1), ladite chambre (40) étant ouverte sur au moins un côté par un dégagement (41; 42) apte à autoriser le passage d'un outil ou d'un autre composant ou d'un moyen d'usinage et/ou d'assemblage pour effectuer une opération sur un dit composant (1), dans lequel ledit posage (20) comporte un unique orifice d'insertion (30) apte à autoriser l'insertion d'un dit composant (1) dans ladite chambre (40) vers lesdites surfaces radiales d'appui de butée (S1 ; S2; S3) dudit posage (20), dans lequel ledit posage (20) est déformable entre une position d'ouverture dans laquelle ledit orifice d'insertion (30) présente une ouverture maximale de largeur égale à ladite épaisseur maximale (E) prédéterminée, dans le sens de l'épaisseur d'un dit composant (1) de part et d'autre de son dit plan médian (PM), et dans laquelle position d'ouverture un dit composant (1) peut être inséré dans ladite chambre (40) jusqu'en position d'appui de butée sur lesdites surfaces radiales d'appui de butée (S1; S2; S3), et une position de fermeture autour d'un dit composant (1) maintenu en appui sur lesdites surfaces radiales d'appui de butée (S1; S2; S3) et serré par lesdites mâchoires (21; 22) soumises à un effort de fermeture exercé par des moyens de manoeuvre agencés pour rapprocher lesdites mâchoires (21; 22) l'une de l'autre et dans lequel lesdits moyens de manoeuvre comportent des articulations flexibles (200) ménagées dans ledit posage (20), qui sont agencées pour, par déformation élastique, engendrer un mouvement relatif entre lesdites mâchoires (21, 22).

2. Posage (20) selon la revendication 1, **caractérisé en ce que** au moins l'une desdites mâchoires (21; 22) comporte des moyens de friction agencés pour tendre à entraîner poussant un dit composant (1) en appui de butée sur lesdites surfaces radiales d'appui de butée (S1; S2; S3) lors de la manoeuvre de fermeture.

3. Posage (20) selon la revendication 1 ou 2, **caractérisé en ce que** ladite chambre (40) est ouverte, sur au moins un côté dudit plan de référence (PR), par un dégagement (41; 42) autorisant à un dit composant (1).

4. Posage (20) selon la revendication 3, **caractérisé en ce que** ladite chambre (40) est ouverte, sur chaque côté dudit plan de référence (PR), par un dégagement (41; 42) autorisant l'accès recto-verso à un dit composant (1).

5. Posage (20) selon la revendication 3 ou 4, **caractérisé en ce que** ladite chambre (40) est ouverte par au moins un dégagement (43) autorisant l'accès latéral à un chant d'un dit composant (1).

6. Posage (20) selon l'une des revendications 1 à 5, **caractérisé en ce qu'**une desdites mâchoires (21 ; 22) est une mâchoire supérieure (21) mue par un entraîneur (100) qui est interne audit posage (20) ou externe audit posage (20) et que comportent lesdits moyens de manoeuvre, et **en ce que** l'autre desdites mâchoires (21; 22) est une mâchoire inférieure (22) comportant une semelle (29) agencée pour la fixation dudit posage (20) à un dispositif d'usinage et/ou d'assemblage.

7. Posage (20) selon la revendication 6, **caractérisé en ce que** ledit entraîneur (100) est interne audit posage (20) et fixé à ladite semelle (29).

8. Posage (20) selon la revendication 6, **caractérisé en ce que** ledit entraîneur (100) est externe audit posage (20) et fixé à un dispositif d'usinage et/ou d'assemblage (300) sur lequel est fixé ledit posage (20).

9. Posage (20) selon les revendications 6 et 8, **caractérisé en ce que** chaque dite articulation flexible (200) comporte une chambre (26), taillée à la fois dans ladite mâchoire supérieure (21) et dans ladite mâchoire inférieure (22), dans laquelle chambre (26) est mobile une masse faisant levier (23), qui est rattachée à chacune desdites mâchoires (21, 22) par une lame élastique (24) ou par un col, pour former avec les autres dites articulations flexibles (200) une table parallèle.

10. Posage (20) selon la revendication 9, **caractérisé en ce que** chaque dit levier (23) est oblique mais non perpendiculaire par rapport audit plan de référence (PR).

11. Posage (20) selon la revendication 9, **caractérisé en ce que** chaque dit levier (23) est agencé pour passer par une position perpendiculaire par rapport audit plan de référence (PR), dans sa course entre sa position d'ouverture et sa position de fermeture.

12. Posage (20) selon l'une des revendications 1 à 11, **caractérisé en ce que** ledit posage (20) comporte au moins un dispositif limiteur de course (28) comportant des surfaces antagonistes (281; 282) qui sont agencées pour coopérer en appui de butée en fin de course utile desdites mâchoires (21; 22), pour éviter toute déformation dangereuse desdites articulations flexibles (200) en-dehors de leur domaine de travail normal.

13. Posage (20) selon la revendication 12, **caractérisé en ce que** ledit posage comporte, entre lesdites mâchoires (21 ; 22) une rainure (25) dont les faces constituent une sécurité supplémentaire d'appui de butée de fin de course.

14. Posage (20) selon l'une des revendications 1 à 13, **caractérisé en ce que** lesdites surfaces d'ablocage (310; 320) font partie desdites mâchoires (21; 22).

15. Posage (20) selon l'une des revendications 1 à 13, **caractérisé en ce que** lesdites surfaces d'ablocage (310 ; 320), font partie d'inserts amovibles (31; 32) logés dans lesdites mâchoires (21; 22), et qui définissent ensemble ledit orifice d'insertion (30).

16. Posage (20) selon l'une des revendications 1 à 15, **caractérisé en ce que** ledit posage (20) comporte un ensemble monobloc constitué par lesdites mâchoires (21; 22) et des articulations flexibles (200) qui les relient l'une à l'autre et qui sont agencées pour, par déformation élastique sous l'action d'un entraîneur (100) sur l'une d'elles, engendrer un mouvement relatif de serrage entre lesdites mâchoires (21, 22).

17. Moyen de production (1000), comportant au moins un dispositif d'usinage et/ou d'assemblage (300) porteur d'au moins un posage (20) selon la revendication 6 et l'une des revendications 1 à 16, et d'au moins un dit entraîneur (100), et comportant encore des moyens de commande de chaque dit entraîneur (100) pour commander un mouvement dudit posage (20) respectif entre ses positions d'ouverture et de fermeture.

## Patentansprüche

1. Untersatz (20) zum Halten einer im Wesentlichen flachen Komponente (1) in einer Bearbeitungs- und/oder Zusammenbauposition, mit einer Dicke kleiner oder gleich einer vorbestimmten maximalen Dicke (E), und die sich beiderseits einer Mittelebene (PM) erstreckt, wobei der Untersatz (20) Anschläge (2; 3) beinhaltet, die mindestens zwei radiale Anschlaganlegeoberflächen (S1; S2; S3) definieren, die Mantellinien beinhalten, die im Wesentlichen senkrecht zu einer Bezugsebene (PR) des Untersatzes (20) sind, wobei die Mittelebene (PM) einer Komponente (1) in der Bearbeitungs- und/oder Zusammenbauposition parallel oder deckungsgleich zu dieser Bezugsebene (PR) ist, und die angeordnet sind, um am Anschlag anliegend mit den umfänglichen Anlegeoberflächen auf dem Rand (11; 12; 13) einer Komponente (1) zusammenzuwirken, wobei der Untersatz (20) eine Kammer (40) beinhaltet, die beiderseits der Bezugsebene (PR) von Backen (21; 22) eingefasst ist, die Aufspannoberflächen (310; 320) zum Halten einer Komponente (1) beinhalten, wobei die Kammer (40) auf mindestens einer Seite durch eine Ausnehmung (41; 42) offen ist, die imstande ist, den Durchgang eines Werkzeugs oder einer anderen Komponente oder eines Bearbeitungs- und/oder Zusammenbaumittels zu erlauben, um einen Vorgang an einer Komponente (1) durchzuführen, wobei der Untersatz (20) eine einzige Einführungsöffnung (30) beinhaltet, die imstande ist, das Einführen einer Komponente (1) in die Kammer (40) in Richtung der radialen Anschlaganlegeoberflächen (S1; S2; S3) des Untersatzes (20) zu erlauben, wobei der Untersatz (20) zwischen einer Öffnungsposition, in der die Einführöffnung (30) eine maximale Öffnung mit einer Breite gleich der vorbestimmten maximalen Dicke (E) in der Richtung der Dicke einer Komponente (1) beiderseits ihrer Mittelebene (PM) aufweist, und in der Öffnungsposition eine Komponente (1) in die Kammer (40) in eine Anschlaganlegeposition auf die radialen Anschlaganlegeoberflächen (S1, S2, S3) eingeführt werden kann, und einer Schließposition um eine Komponente (1) verformbar ist, die auf Anlage an den radialen Anschlaganlegeoberflächen (S1, S2, S3) gehalten wird, und durch die Backen (21; 22) geklemmt wird, die einer Schließkraft ausgesetzt sind, die durch Manövriermittel ausgeübt wird, die angeordnet sind, um die Backen (21; 22) einander anzunähern, und wobei die Manövriermittel flexible Gelenke (200) umfassen, die in dem Untersatz (20) vorgesehen sind, die angeordnet sind, um durch elastische Verformung eine relative Bewegung zwischen den Backen (21, 22) zu bewirken.

2. Untersatz (20) nach Anspruch 1, **dadurch gekennzeichnet, dass** mindestens eine der Backen (21; 22) Reibungsmittel beinhaltet, die angeordnet sind, um dazu zu neigen, um eine Komponente (1) beim Schließvorgang auf die radialen Anschlaganlegeflächen (S1; S2; S3) drückend anzutreiben.

3. Untersatz (20) nach Anspruch 1 oder 2, **dadurch gekennzeichnet, dass** die Kammer (40) auf mindestens einer Seite der Bezugsebene (PR) durch eine Ausnehmung (41; 42) geöffnet ist, die den Zugang zu einer Komponente (1) erlaubt.

4. Untersatz (20) nach Anspruch 3, **dadurch gekennzeichnet, dass** die Kammer (40) auf jeder Seite der Bezugsebene (PR) durch eine Ausnehmung (41; 42) geöffnet ist, die den beidseitigen Zugang zu einer Komponente (1) erlaubt.

5. Untersatz (20) nach Anspruch 3 oder 4, **dadurch gekennzeichnet, dass** die Kammer (40) durch mindestens eine Ausnehmung (43) geöffnet ist, die den seitlichen Zugang zu einem Rand einer Komponente (1) erlaubt.

6. Untersatz (20) nach einem der Ansprüche 1 bis 5, **dadurch gekennzeichnet, dass** eine der Backen (21; 22) eine obere Backe (21) ist, die durch einen Mitnehmer (100) bewegt wird, der sich innerhalb des Untersatzes (20) oder außerhalb des Untersatzes (20) befindet, und die die Manövriermittel beinhalten, und dadurch, dass die andere der Backen (21; 22) eine untere Backe (22) ist, die eine Sohle (29) beinhaltet, die zur Befestigung des Untersatzes (20) an einer Bearbeitungs- und/oder Zusammenbauvorrichtung angeordnet ist.

7. Untersatz (20) nach Anspruch 6, **dadurch gekennzeichnet, dass** der Mitnehmer (100) innerhalb des Untersatzes (20) liegt und an der Sohle (29) befestigt ist.

8. Untersatz (20) nach Anspruch 6, **dadurch gekennzeichnet, dass** der Mitnehmer (100) außerhalb des Untersatzes (20) liegt und an einer Bearbeitungs- und/oder Zusammenbauvorrichtung (300) befestigt ist, an der der Untersatz (20) befestigt ist.

9. Untersatz (20) nach den Ansprüchen 6 und 8, **dadurch gekennzeichnet, dass** jedes flexible Gelenk (200) eine Kammer (26) beinhaltet, die sowohl in die obere Backe (21), als auch in die untere Backe (22) eingearbeitet ist, wobei in dieser Kammer (26) eine Hebelmasse (23), die an jeder der Backen (21, 22) durch eine elastische Klinge (24) oder durch einen Kragen befestigt ist, beweglich ist, um mit den anderen flexiblen Gelenken (200) einen parallelen Tisch zu bilden.

10. Untersatz (20) nach Anspruch 9, **dadurch gekennzeichnet, dass** jeder Hebel (23) schräg, aber nicht senkrecht zu der Bezugsebene (PR) steht.

11. Untersatz (20) nach Anspruch 9, **dadurch gekennzeichnet, dass** jeder Hebel (23) angeordnet ist, um auf seinem Weg zwischen seiner Öffnungsposition und seiner Schließposition eine Position zu durchlaufen, die senkrecht in Bezug zur Bezugsebene (PR) liegt.

12. Untersatz (20) nach einem der Ansprüche 1 bis 11, **dadurch gekennzeichnet, dass** der Untersatz (20) mindestens eine Wegbegrenzungsvorrichtung (28) beinhaltet, die gegenwirkende Oberflächen (281; 282) beinhaltet, die angeordnet sind, um am Ende des Nutzweges der Backen (21; 22) auf Anschlag anliegend zusammenwirken, um jede gefährliche Verformung der flexiblen Gelenke (200) außerhalb ihres normalen Betriebsbereichs zu vermeiden.

13. Untersatz (20) nach Anspruch 12, **dadurch gekennzeichnet, dass** der Untersatz zwischen den Backen (21; 22) eine Nut (25) beinhaltet, deren Flächen eine zusätzliche Sicherheit für den anliegenden Endanschlag bilden.

14. Untersatz (20) nach einem der Ansprüche 1 bis 13, **dadurch gekennzeichnet, dass** die Aufspannoberflächen (310; 320) Teil der Backen (21; 22) sind.

15. Untersatz (20) nach einem der Ansprüche 1 bis 13, **dadurch gekennzeichnet, dass** die Aufspannoberflächen (310; 320) Teil herausnehmbarer Einsätze (31; 32) sind, die in den Backen (21; 22) untergebracht sind und die zusammen die Einführungsöffnung (30) bilden.

16. Untersatz (20) nach einem der Ansprüche 1 bis 15, **dadurch gekennzeichnet, dass** der Untersatz (20) eine einteilige Baugruppe beinhaltet, die aus den Backen (21; 22) und flexiblen Gelenken (200) besteht, die sie miteinander verbinden und die angeordnet sind, um durch elastische Verformung unter der Wirkung eines Mitnehmers (100) auf einem von ihnen eine relative Klemmbewegung zwischen den Backen (21, 22) zu erzeugen.

17. Produktionsmittel (1000), das mindestens einer Bearbeitungs- und/oder Zusammenbauvorrichtung (300) beinhaltet, die mindestens einen Untersatz (20) nach Anspruch 6 und einem der Ansprüche 1 bis 16 und mindestens einen Mitnehmer (100) trägt, und weiter mit Mittel zum Steuern jedes Mitnehmers (100) beinhaltet, um eine Bewegung des jeweiligen Untersatzes (20) zwischen seiner Öffnungs- und Schließposition anzusteuern.

## Claims

1. A fitting (20) for holding in the machining and/or assembly position a substantially flat component (1) with a thickness less than or equal to a predetermined maximum thickness (E) and extending on either side of a median plane (PM), in which said fitting (20) includes stops (2; 3) defining at least two radial abutment support surfaces (S1; S2; S3) including generators which are substantially perpendicular to a reference plane (PR) of said fitting (20), relative to which reference plane (PR) said median plane (PM) of one said component (1) is parallel or coincident in said machining and/or assembly position, and which are arranged to cooperate in abutment support with peripheral edge support surfaces (11; 12; 13) of one said component (1), in which said fitting (20) includes a chamber (40) which is bordered, on either side of said reference plane (PR), by jaws (21; 22) including clamping surfaces (310; 320) for holding one said component (1), said chamber (40) being open on at least one side by a recess (41; 42) capable of enabling the passage of a tool or another component or a machining and/or assembly means to perform an operation on one said component (1), in which said fitting (20) includes a single insertion orifice (30) capable of enabling the insertion of one said component (1) into said chamber (40) towards said radial abutment support surfaces (S1; S2; S3) of said fitting (20), in which said fitting (20) is deformable between an open position in which said insertion orifice (30) has a maximum opening of width equal to said predetermined maximum thickness (E), in the direction of the thickness of one said component (1) on either side of the said median plane (PM) thereof, and in which open position one said component (1) can be inserted into said chamber (40) to an abutment support position on said radial abutment support surfaces (S1; S2; S3), and a closed position around one said component (1) held supported on said radial abutment support surfaces (S1; S2; S3) and tightened by said jaws (21; 22) subjected to a closing force exerted by manoeuvring means arranged to bring said jaws (21; 22) closer to each other and in which said manoeuvring means include flexible hinges (200) formed in said fitting (20), which are arranged to, by elastic deformation, generate a relative movement between said jaws (21, 22).

2. The fitting (20) according to claim 1, **characterised in that** at least one of said jaws (21; 22) includes friction means arranged to tend to drive pushing one said component (1) in abutment support on said radial abutment support surfaces (S1; S2; S3) during the closing manoeuvre.

3. The fitting (20) according to claim 1 or 2, **characterised in that** said chamber (40) is open, on at least one side of said reference plane (PR), by a recess (41; 42) enabling one said component (1).

4. The fitting (20) according to claim 3, **characterised in that** said chamber (40) is open, on each side of said reference plane (PR), by a recess (41; 42) enabling the double-sided access to one said component (1).

5. The fitting (20) according to claim 3 or 4, **characterised in that** said chamber (40) is open by at least one recess (43) enabling the lateral access to an edge of one said component (1).

6. The fitting (20) according to one of claims 1 to 5, **characterised in that** one of said jaws (21; 22) is an upper jaw (21) moved by a driver (100) which is internal to said fitting (20) or external to said fitting (20) and that said manoeuvring means include, and **in that** the other of said jaws (21; 22) is a lower jaw (22) including a sole (29) arranged for fastening said fitting (20) to a machining and/or assembly device.

7. The fitting (20) according to claim 6, **characterised in that** said driver (100) is internal to said fitting (20) and fastened to said sole (29).

8. The fitting (20) according to claim 6, **characterised in that** said driver (100) is external to said fitting (20) and fastened to a machining and/or assembly device (300) on which said fitting is fastened (20).

9. The fitting (20) according to claims 6 and 8, **characterised in that** each said flexible hinge (200) includes a chamber (26), cut both in said upper jaw (21) and in said lower jaw (22), in which chamber (26) a lever mass (23), which is attached to each of said jaws (21, 22) by an elastic blade (24) or by a neck, is movable to form with the other said flexible hinges (200) a parallel table.

10. The fitting (20) according to claim 9, **characterised in that** each said lever (23) is oblique but not perpendicular relative to said reference plane (PR).

11. The fitting (20) according to claim 9, **characterised in that** each said lever (23) is arranged to pass through a position perpendicular relative to said reference plane (PR), in its travel between its open position and its closed position.

12. The fitting (20) according to one of claims 1 to 11, **characterised in that** said fitting (20) includes at least one travel limiting device (28) including counteracting surfaces (281; 282) which are arranged to cooperate in abutment support at the end of useful travel of said jaws (21; 22), to avoid any dangerous deformation of said flexible hinges (200) outside their normal operating range.

13. The fitting (20) according to claim 12, **characterised in that** said fitting includes, between said jaws (21; 22) a groove (25) whose faces constitute an additional safety of end-of-travel abutment support.

14. The fitting (20) according to one of claims 1 to 13, **characterised in that** said clamping surfaces (310; 320) form part of said jaws (21; 22).

15. The fitting (20) according to one of claims 1 to 13, **characterised in that** said clamping surfaces (310; 320) form part of removable inserts (31; 32) housed in said jaws (21; 22), and which together define said insertion orifice (30).

16. The fitting (20) according to one of claims 1 to 15, **characterised in that** said fitting (20) includes a one-piece assembly consisting of said jaws (21; 22) and flexible hinges (200) which connect them to each other and which are arranged to, by elastic deformation under the action of a driver (100) on one of them, generate a relative tightening movement between said jaws (21, 22).

17. Production means (1000), including at least one machining and/or assembly device (300) carrying at least one fitting (20) according to claim 6 and one of claims 1 to 16, and at least one said driver (100), and further including means for controlling each said driver (100) to control a movement of said respective fitting (20) between its open and closed positions.
